# EUROPEAN PATENT APPLICATION

(11) **EP 1 094 382 A1**
(43) Date of publication of application: **25.04.2001**
(21) Application number: 99308216.3
(22) Date of filing: 18.10.1999
(51) Int. Cl.: G06F 1/24

(54) **Reset device and control system**

(71) Applicant: Sony Service Center (Europe) N.V., 1840 Londerzeel (BE)
(72) Inventor: Weybouw-Cognard, Lucile, c/o Sony Ser. Ctr(EUR)N.V, 1130 Brussels (BE); Hostyn, Tom, c/o Sony Service Centre (Europe) N.V., 1130 Brussels (BE)
(74) Representative: Ayers, Martyn Lewis Stanley

(57) **Abstract**

A reset device including an input for receiving a control signal from a remote device, an output for connection to a processing board and a control for selectively resetting a processing board connected to the output upon receiving the control signal and a control system including the reset device and a serial port controller for connecting a plurality of processing boards to a network and/or a board server for connection to the network and for monitoring usage of at least one processing board available on the network.

## Description

The present invention relates to a reset device and a control system, in particular to a reset device for remotely resetting a processing board and to a control system which allows remote precessing boards to be reset and used via a network.

Increasingly, software is being developed for use on various platforms. During the development of this software, it is desirable to test the software on the various platforms. In this regard, the platforms can be viewed as processing boards. Thus, when developing new software, a developer or tester will have to obtain each of the required processing boards and download the software onto each of the processing boards for testing.

Clearly, within a single development company, the various processing boards may be distributed within the offices of a development company, possibly within a single building or even across the world. This creates difficulties to developers. In particular, many identical processing boards must be provided for all of the developers, processing boards must be physically moved around the development company or software must be transferred for other members of staff to download and test on the processing boards.

An object of the present invention is to provide means for overcoming these problems.

The present invention is based on the recognition that providing processing boards on a network will allow developers and testers on that network to test software on the processing boards remotely. It is also based on the recognition of the problems of implementing such a system.

In particular, unlike running programs on networked computer processors, when downloading software for testing, in particular low level software, it is necessary to reset processing boards before the software is downloaded. This presents a problem, since the reset functions of a processing board are provided on the board itself and cannot be operated remotely.

Furthermore, there is a problem that, if two developers attempt to use the same processing board, one developer may cause the processing board to be reset whilst the work station of the other developer is in the middle of testing software.

According to the present invention, there is provided a reset device including:
an input for receiving a control signal from a remote device;
an output for connection to a processing board;
a control for selectively resetting a processing board connected to the output upon receiving the control signal.

According to the present invention there is also provided a control system, including:
a communication controller, preferably a serial port controller,for connection to a network and a plurality of processing boards, the communication controller, under instruction from a work station on the network, connecting at least one of the plurality of processing board which is not in use to the work station via the network;
a reset device as defined above; wherein
upon connection to the at last one processing board, the work station initiates resetting of the at least one processing board using the reset device.

According to the present invention there is also provided a control system including:
a board server for connection to a network and for monitoring usage of at least one processing board available on the network, the board server, depending on current usage of the at least one processing board, authorising a work station on the network to reset the at least one processing board and download software onto the at least one processing board; and
a reset device as defined above; wherein
having received authorisation from the board server, the work station initiates resetting of the at least one processing board using the reset device.

In this way, developers on work stations on the network can cause remote processing boards to be reset.

When a plurality of processing boards are connected to the network via a serial port controller, by the nature of the serial port controller, it is not possible for more than one work station to connect to a single processing board. Hence, a work station will attempt in sequence to connect to the available processing boards and, having successfully connected to a processing board, can then cause the reset device to reset that processing board.

Alternatively, by monitoring the usage of processing boards, the board server can ensure that work stations only attempt to connect to unused processing boards. The work station could merely request the various processing boards in sequence or it could request from the board server a list of available processing boards. Preferably, a work station merely requests a particular type of processing board and the board server allocates any processing board of that type to the work station. In this way, only when the work station has received authorisation for a particular processing board from the board server can the work station then initiate resetting of that processing board.

It should be appreciated that reference to work station considers only one user operating on that work station. Where several users use the same physical work station, each user/work station is considered as a separate work station. Thus, in effect, it is a user which receives authorisation.

When using a board server, it is possible for processing boards to be connected to the network individually. However, it is preferred that the control system includes a serial port controller and that each processing board is connected to the network via the serial port controller. In this arrangement, of course, other processing boards can also be connected to the serial port controller. Although access to those processing boards will automatically be limited by the nature of the serial port controller, since the board server can monitor usage of the individual processing boards connected to the serial port controller this aspect of the serial port controller is redundant.

Preferably having received authorisation, the work station issues a reset command to the board server and, having received the reset command, the board server issues a reset request. The authorisation can take many forms. However, it is preferred that it takes the form of a "capability" sent to the work station. In particular, the "capability" acts as a key such that the board server will only allow resetting of a board when it receives the appropriate "capability" from an instructing work station. In this way also, a "capability" may be passed to another work station, thereby transferring authorisation to that work station.

In this way, it is not possible for a work station to reset a processing board which is already in use, since the board server will only issue the reset request for a processing board which it is allocating to the instructing work station.

Where the control system includes a serial port controller, the reset request may be issued to the serial port controller and the serial port controller can then provide the control signal to the reset device.

Preferably, the control system includes a reset server for connection to the network and the reset device, the board server issuing the reset request to the reset server and the reset server providing the control signal to the reset device.

This allows the reset devices to be controlled over the network without the use of a serial port controller.

The control system may include a plurality of reset devices with respective reset servers connected to the network.

Hence, a work station may be able to operate a plurality of processing boards distributed at different sites.

Furthermore, each reset device may have a plurality of outputs for connection to respective processing boards and may selectively reset individual ones of those boards.

In this way, for each reset device on the network, there may be a number of processing boards.

There may be only one board server on the network for controlling a plurality of reset servers, reset device and/or serial port controllers. However, it is also possible to provide a plurality of board servers, each for monitoring usage of respective groups of one or more processing boards.

By providing more than one board server, the speed of operation of individual board servers may be increased. However, a work station will then have to communicate with more than one board server. Of course, a network could have several independent sets of processing boards. This is a way to respect the property of the boards. In particular, each set of boards may be associated with a server and a team using the server. Otherwise, anyone could reserve any board on the network.

It will be appreciated that the system allows a plurality of work stations to be connected on the network to access the various processing boards.

The present invention will be more clearly understood from the following description, given by way of example only, with reference to the accompanying drawings, in which:

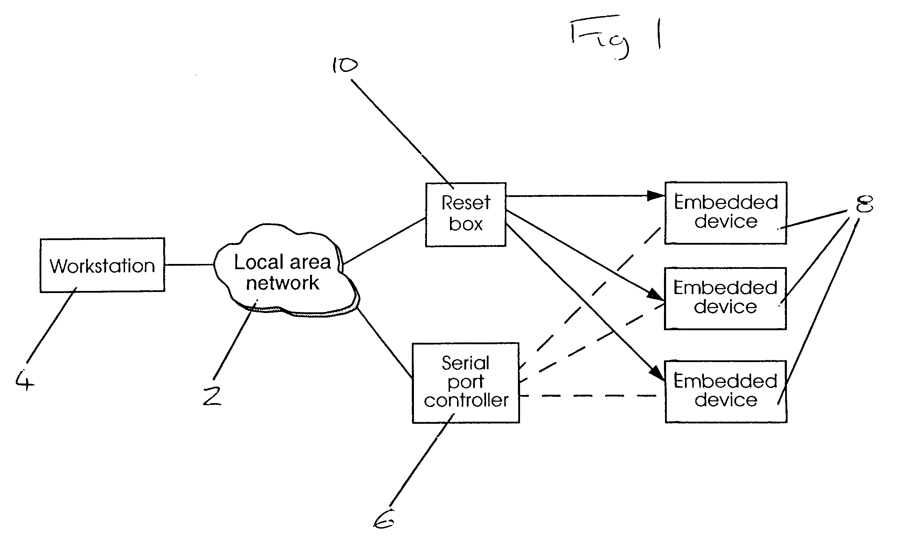

Figures 1, 2, 3 and 4 illustrate respective systems embodying the present invention.

The present invention is based on the recognition of a need to test software on remote devices. In this respect, the remote devices, which will be referred to as processing boards, are provided on a network. The following embodiments are described with reference to a Local Area Network. However, clearly, the various parts of the system may be distributed around any network, including the Internet.

Figure 1 illustrates a local area network 2 to which a work station 4 is connected. The work station 4 may be operated by a designer of new software for testing.

At another location on the network 2, there is provided a serial port controller 6. The serial port controller 6 is, in turn, connected to a plurality of processing boards 8. The serial port controller makes a large number of serial ports accessible over the network. It makes it possible to communicate with the serial ports over a Telnet session.

In this way, where a number of work stations 4 are operating on the network 2, it is only possible for one work station 4 to communicate with a processing board 8 at any one time. Thus, while a work station 4 is using a processing board 8 via the serial port controller 6, it is not possible for another work station to interrupt the operation.

In use, when a work station 4 wishes to use a processing board 8, it attempts to connect to one of the processing boards 8 via the serial port controller 6. If this is not possible, i.e. because the processing board 8 is already in use, the work station 4 moves on to attempt connection with a processing board 8. This continues until a connection is achieved.

There is a problem in using processing boards 8 remotely, particularly when the software to be reloaded on the processing board is of a low level. In particular, it is not possible for a work station 4 to communicate with a processing board 8 via the serial port controller 6 directly so as to reset the processing the processing board 8. Resetting of processing boards requires manual operation of a reset button. This is clearly not possible from a remotely located work station 4.

In order to overcome this problem, a reset device 10 is proposed. This reset device 10 includes a suitable interface for connection to the network 2. It then also includes at least one output for connection to a processing board 8, for resetting that processing board 8.

Thus, in use, once a work station 4 has established a connection with a processing board 8, such that it knows that no other work station is using that processing board 8, it instructs the reset device 10 to reset that processing board 8. The work station 4 can then download onto the processing board 8, via the network 2 and serial port controller 6, the software application for testing. It may then conduct the required tests.

Alternatively, the application can be downloaded via ethernet using an ethernet connection to the network. The serial line will then allow interaction with software running on the board in the same way.

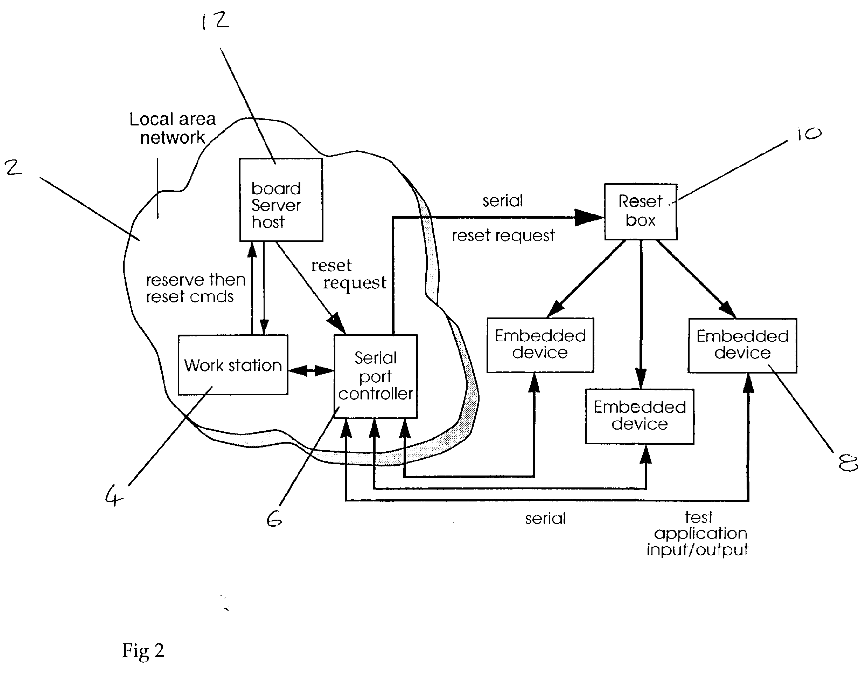

Although the above system allows work stations to use processing boards remotely, it requires a work station 4 to follow the procedure and not reset a processing board 8 unless it can make a connection. In particular, it still allows a user to ignore the procedure and reset a board in use by another user. Hence, it is proposed to introduce a board server on the network 2. This is illustrated in figure 2.

A board server 12 is connected to the serial port controller 6 and work station 4 via the network. Where all of the processing boards 8 are at one physical location, connected to a single serial port controller 6, it is possible for the board server 12 to be connected directly to the serial port controller 6. However, it is preferred that the board server 12 should be connected for access on the network 2. Indeed, this enables a plurality of serial port controllers and respective processing boards to be distributed around the network.

The board server 12 monitors usage of the processing boards 8 by work stations on the network 2. In particular, it knows at any one time which processing boards 8 are in use. The board server 12 may actually be embodied on one of the work stations on the network in software.

Thus, in this embodiment, when a work station 4 wishes to use a particular processing board 8, it sends a command to the board server 12 requesting that that processing board 8 be reserved. If that processing board is currently in use by another work station, then the board server 12 will send a return message to the work station for refusing reservation of that processing board 8. The work station 4 can then request reservation of a different processing board 8. If the work station 4 requests a processing board 8 which is currently available, then the board server 12 reserves that processing board 8 for the work station 4 and returns an authorisation to the work station 4. This authorisation can be considered as a "capability". It is preferably issued in respect of a particular user, since more than one user might use a single work station. The "capability" may be considered as a key. In particular, the board server will only act on a reset command if accompanied by the appropriate "capability". In this way, it is also possible for a work station to pass its "capability" to another work station, such that the other work station can reset and use the reserved board.

It would now be possible for the work station 4 to instruct the reset device 10 to reset the appropriate processing board 8 as described above. However, in the embodiment of figure 2, the reset request has to come from the board server 12. This prevents unauthorised work stations from resetting processing boards 8. Thus, having received authorisation, a work station 4 issues a reset command to the board server 12 in respect of the reserved processing board 8, the reset command being guaranteed by the "capability" received by the work station 4 for that processing board 8. The board server 12 checks the authorisation or "capability" and, if this is correct, issues a reset request to the serial port controller 6 which passes this on as a reset control signal to the reset device 10. Thus, it is only possible for a processing board 8 to be reset when it has been reserved by the board server 12 for use by a new work station 4.

Having reserved and reset a particular processing board 8, the work station 4 can then communicate with the serial port controller 6 over the network 2 so as to download the software for testing.

Thus, a number of work stations can access and reset processing boards 8 distributed around a network and, by means of the board server 12, processing boards are not reset by unauthorised work stations.

Since the board server 12 maintains a record of processing board usage, it is possible for the board server 12 to interact more constructively with the work stations around the network 2. In particular, a workstation 4 can establish from the board server 12 which remote processing boards 8 are available for use. Hence, the workstation 4 need only issue reservation requests in respect of processing boards 8 which are known to be free for use.

The board server 12 may have a further advantageous use to be discussed below. In many systems, there will be a variety of processing boards 8 around the network and there are likely to be a plurality of each type of processing device. Thus, a workstation 4 can merely request that a processing board 8 of a particular type be reserved for its use. The board server 12 can then automatically select one or the processing boards 8 of that type available for use and indicate this to the workstation 4, together with an authorisation.

It is also possible for the board server to manage a request queue. In particular, if there is no board of a requested type available, the board server can keep requests in a queue and issue authorisations to work stations as boards of that type become available.

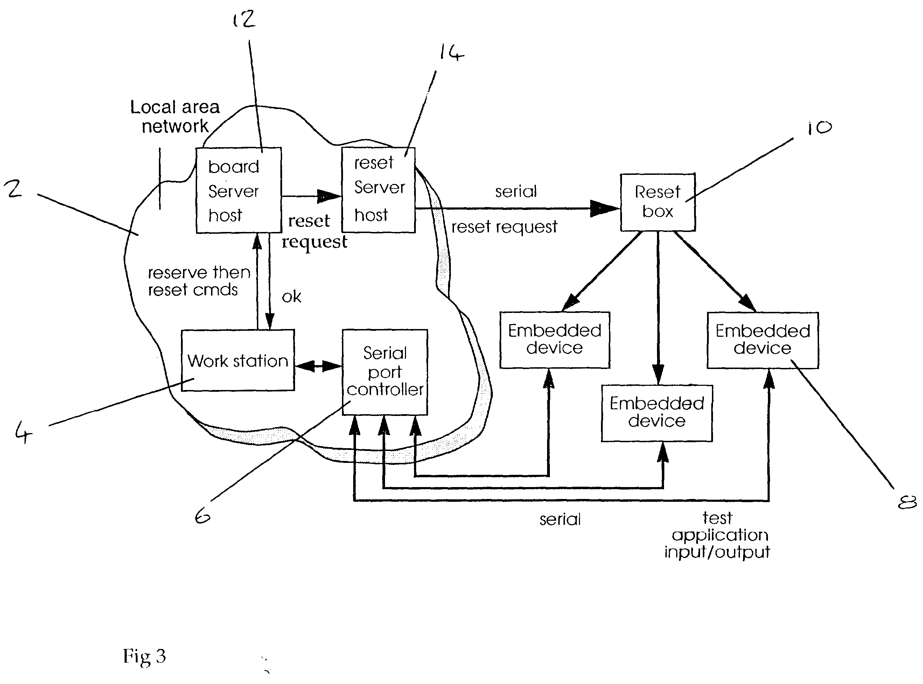

As described above, the board server 12 issues the reset request to the serial port controller 6. However, as illustrated in Figure 3, it is also possible to provide the board server 12 with a respective reset server 14. Hence, the reset server 14 receives the reset request from board server 12 and then produces the appropriate reset control signal for the reset device 10.

The reset server 14 is used to connect the reset device 10 to the network and provides a serial connection to the reset device. It is possible for the reset server 14 to have two or more serial ports. However, reset devices 10 could be chained and be handled by only one serial port.

The reset server may be embodied on a work station 4 in software. However, it could be a dedicated device. Indeed, it is possible to provide a dedicated reset device 10 which is capable of connection to the network.

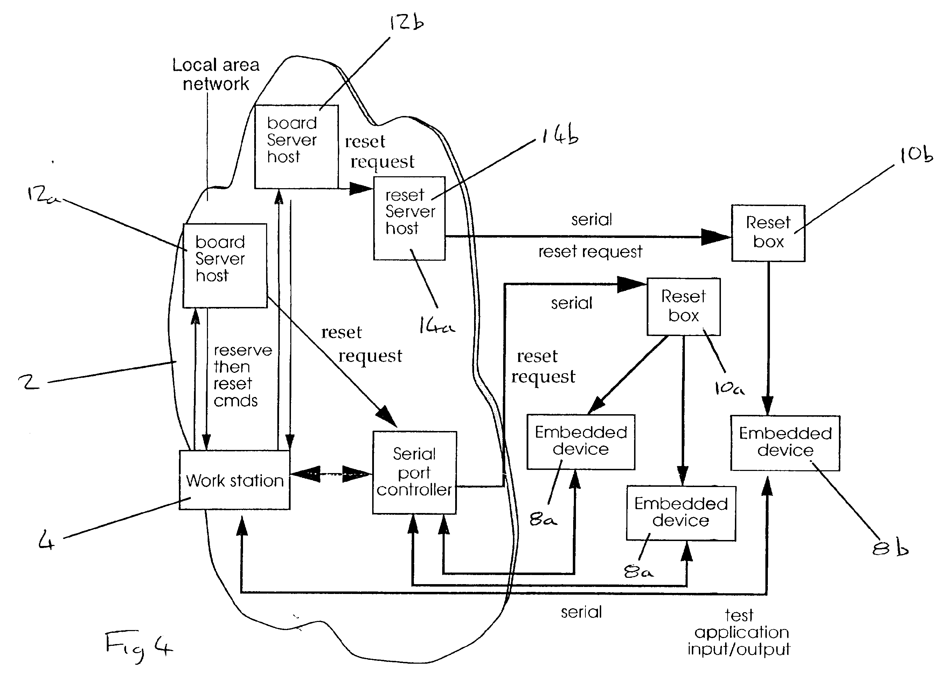

It is possible to provide more than one board server on the network 2. This is illustrated in Figure 4. In this regard, each board server 12a, 12b is responsible for a respective group of processing boards 8a, 8b. This set up may allow faster operation of the board servers. However, it requires workstations to apply separately to each board server for authorisation to use processing boards from their respective groups.

## Claims

1. A reset device including:
an input for receiving a control signal from a remote device;
an output for connection to a processing board; and
a control for selectively resetting a processing board connected to the output upon receiving the control signal.

2. A control system, including:
a communication controller for connection to a network and a plurality of processing boards, the communication controller, under instruction from a work station on the network, connecting at least one of the plurality of processing board which is not in use to the work station via the network;
a reset device according to claim 1; wherein
upon connection to the at last one processing board, the work station initiates resetting of the at least one processing board using the reset device.

3. A control system according to claim 2 wherein the communication controller is a serial port controller.

4. A control system including:
a board server for connection to a network and for monitoring usage of at least one processing board available on the network, the board server, depending on current usage of the at least one processing board, authorising a work station on the network to reset the at least one processing board and download software onto the at least one processing board; and
a reset device according to claim 1; wherein
having received authorisation from the board server, the work station initiates resetting of the at least one processing board using the reset device.

5. A control system according to claim 4 wherein the at least one processing board is connected to the network individually by means of an interface.

6. A control system according to claim 4 including:
a serial port controller for connection to the network and to a plurality of processing boards including said at least one processing board.

7. A control system according to claim 4, 5 or 6 wherein, having received authorisation, the work station issues a reset command to the board server and, having received the reset command, the board server issues a reset request.

8. A control system according to claim 7 wherein the board server issues the reset request to the serial port controller and the serial port controller provides the control signal to the reset device.

9. A control system according to claim 7 including:
a reset server for connection to the network and the reset device, the board server issuing the reset request to the reset server and the reset server providing the reset signal to the reset device.

10. A control system according to claim 9 including:
a plurality of reset devices with respective reset servers for connection to the network.

11. A control system according to any one of claims 4 to 10 wherein the board server maintains a list of available processing boards for each processing board type and, upon request for a particular processing board type from a work station, authorizes the work station with respect to one of the available processing boards of the particular processing board type.

12. A control system according to any one of claims 4 to 11 including:
a plurality of board servers, each for monitoring usage of respective groups of one or more processing boards.

13. A control system according to any one of claims 3 to 9 including:
a plurality of reset devices for use over the network.

14. A reset device according to claim 1 or a control system according to any one of claims 3 to 13 wherein the reset device has a plurality of outputs for connection to respective processing boards and is for selectively resetting individual ones of the processing boards.

15. A reset device according to claim 1 incorporating a reset server for connection to a network, the reset server providing the control signal to the input upon receipt of a reset request over the network.
